(19) Europäisches Patentamt
European Patent Office
Office européen des brevets

(11) Numéro de publication: **0 055 190**
**B1**

(12) **FASCICULE DE BREVET EUROPEEN**

(45) Date de publication du fascicule du brevet: **23.01.85**

(51) Int. Cl.⁴: **D 01 F 6/60**, C 08 L 77/10, C 08 G 69/32

(21) Numéro de dépôt: **81420156.2**

(22) Date de dépôt: **29.10.81**

# (54) Compositions de polyparaphénylènetéréphtalamide ainsi que leur préparation et procédé d'obtention de fibres à partir de telles compositions.

(30) Priorité: **22.12.80 FR 8027412**

(43) Date de publication de la demande: **30.06.82 Bulletin 82/26**

(45) Mention de la délivrance du brevet: **23.01.85 Bulletin 85/4**

(84) Etats contractants désignés: **AT BE CH DE GB IT LI LU NL SE**

(56) Documents cités:
**FR - A - 2 355 864**

**CHEMICAL ABSTRACTS, vol. 88, 1978, page 16, abrégé 121918f, COLUMBUS, OHIO (US)**

(73) Titulaire: **RHONE-POULENC TEXTILE, 25, Quai Paul Doumer, F-92408 Courbevoie Cedex (FR)**

(72) Inventeur: **Cuidard, Robert, 3, Route de Champagne, F-69130 Ecully (FR)**
Inventeur: **Giroud-Abel, Bruno, 7, Chemin Charrière Blanche, F-69130 Ecully (FR)**
Inventeur: **Rochina, Vincent, "Lagay" Saint-Pierre-La-Palud, F-69210 l'Arbresle (FR)**

(74) Mandataire: **Prud'Homme, Simone et al, RHONE-POULENC-TEXTILE Direction Technique-Brevets BP 82-41, F-69355 Lyon Cedex 08 (FR)**

EP 0 055 190 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

L'invention concerne de nouvelles compositions à base de polyparaphénylènetéréphthalamide (PPD-T) et de N-méthylpyrrolidone-2 (NMP), conformables directement en fils, fibres, films ou fibrides.

L'invention concerne également leur procédé de préparation ainsi qu'un procédé très simplifié d'obtenion de fibres en PPD-T.

Il est connu par les brevets français 1 599 980 et 2 010 753 de préparer des compositions optiquement anisotropes de polyamides aromatiques dans des liquides être de l'acide sulfurique, fluorhydrique ou différents amides et urées tels que diméthylacétamide (DMAC), N-méthylpyrrolidone-2 (NMP), hexaméthylphosphotriamide (HMPT) et tétraméthylurée (TMU), ces derniers éventuellement en mélange avec des sels tels que chlorure de lithium ou calcium et de filter ces compositions. Cependant, lorsqu'il s'agit de PPD-T, sa polycondensation est uniquement effectuée dans l'HMPT pur ou le mélange HMPT/NMP à au moins 45% d'HMPT et le PPD-T obtenu est généralement séparé du milieu réactionnel et ridissous dans l'acide sulfurique pour filage de la composition sulfurique. Il a bien été prévu de filter directement la composition anisotrope de PPD-T obtenue à la polycondensation sans séparation du polymère, mais alors il s'agit toujours de compositions à forte proportion d'HMPT. Or, les propriétés cancérigènes de l'HMPT découvertes récemment interdisent son emploi dans l'industrie. Certains polymères aromatiques sont bien polycondensés dans des mélanges solvants moins dangereux comme DMAC additionné de chlorure de lithium, et les compositions obtenues filées directement, mais il s'agit de polymères plus solubles que le PPD-T comme le poly(chloro-p-phénylènetéréphthalamide).

De même, selon la demande de brevet française 2 134 582 publiée le 08. 12. 72, pour l'obtention de PPD-T de haute viscosité, on utilise uniquement le mélange HMPT/NMP, puis on sépare le PPD-T par agitation avec de l'eau et le dissout dans l'acide sulfurique pour filer la composition sulfurique, optiquement anisotrope, ainsi obtenue.

Par ailleurs, certains textes décrivent la préparation de polyamides aromatiques dans un mélange constitué d'un amide substitué comme diméthylacétamide ou N-méthylpyrrolidone-2 et d'un chlorure de calcium ou sodium, éventuellement en présence d'une base tertiaire. Mais ces textes prévoient généralement l'utilisation de gammes très larges des divers constituants du milieu réactionnel tant dans leur nature que dans leur teneur, de sorte qu'aucun des exemples utilisant à la fois la NMP, le chlorure de calcium ou lithium et la pyridine, la méthylpyridine ou la diméthyl ou diéthylaniline n'ont pu conduire à des sulutions particulières. C'est le cas des demandes de brevet français 2 301 548 publiée le 17. 09. 76 et 2 355 864 publiée le 20. 01. 78 ainsi que du brevet belge 851 965 publié le 01. 09. 77 et de la demande japonaise 77 124 099. Dans tous ces textes, le PPD-T obtenu est ensuite séparé de la composition, lavé, séché puis dissous dans l'acide sulfurique concentré ou un de ses dérivés pour le filage ultérieur.

Enfin les demandes japonaises 79 018 922 et 80 022 052 publiées respectivement le 13. 02. 79 et le 16. 02. 80 décrivent la préparation de copolyamides aromatiques dans le diméthylacétamide ou la N-méthylpyrrolidone et le filage direct de la solution obtenue. Mais on sait que ces copolymères qui contiennent des liaisons éther et éventuellement des substitutions chlorées sont beaucoup plus solubles que le PPD-T sensiblement pur.

Par PPD-T sensiblement pur on entend les polymères contenant au moins 95% de radicaux paraphénylène et moins de 5% d'autres radicaux rigides ou souples tels que naphtylène-1,5 ou -2,6, pyridylène-2,5 métaphénylène,naphtylène-1,8 ou -2,7, butylène, etc.

Par contre, à la connaissance de la demanderesse, il n'a jamais été possible jusqu'à présent d'obtenir par polycondensation des solutions de PPD-T filables directement sans séparation de polymère et ne contenant pas d'HMPT.

La présente invention concerne une composition fluide, homogène conformable constituée de N-méthylpyrrolidone-2, de PPD-T, contenant au moins 95% de radicaux paraphénylène, à raison de 5 à 7%, en poids de polymère par rapport au poids de la composition, de chlorure de calcium ou de lithium et d'une amine tertiaire de pK $H_2O$ inférieur ou égal à 6,60, le rapport du nombre de moles de ces deux dernier produits au nombre d'unités paraphénylènetéréphthalamide étant de 0,75 à 2 pour le chlorure de calcium ou de lithium et de 1 à 3 pour l'amine tertiaire.

L'invention concerne également un procédé pour l'obtention de la composition ci-dessus selon lequel on fait réagir en continu ou discontinu du chlorure de téréphtaloyle en quantité sensiblement stoechiométrique sur une solution de paraphénylènediamine, de teneur en eau inférieure à 1000 ppm, en quantité telle que l'on puisse former une composition d'au moins 5% en poids de paraphénylènetéréphtalamide, dans un mélange homogène de N-méthylpyrrolidone, de chlorure de calcium ou lithium et d'une amine tertiaire de pK $H_2O$ inférieur ou égal à 6,60, le rapport molaire de chacun de ces deux derniers produits à la paraphénylènediamine étant de 0,75 à 2 pour le chlorure de calcium ou de lithium et de 1 à 3 pour l'amine tertiaire, sans toutefois dépasser la limite de solubilité du chlorure de calcium ou lithium et on ajoute éventuellement une nouvelle quantité de la même amine tertiaire et/ou de N-méthylpyrrolidone-2 pouvant contenir du chlorure de calcium ou lithium pour que la composition finale contienne 5 à 7% en poids de polyparaphénylènetéréphtalamide et à la fois 0,75 à 2 moles de

chlorure de calcium ou lithium et de préférence 2 à 3 moles d'amine tertiaire par unité paraphénylènetéréphtalamide.

L'invention concerne aussi un procédé simplifié d'obtenion de fils, fibres ou fibrides en polyparaphénylènetéréphtalamide de bonnes qualités mécaniques par extrusion ou coulage de la composition ci-dessus à une température de préférence inférieure à 25° C dans un bain coagulant à base d'eau à température de préférence inférieure à 35° C, lavage à l'eau et séchage à l'air.

L'amine tertiaire utilisée selon la présente invention doit présenter un pK $H_2O$ ou $pK_a$ au plus égal à 6,60. Comme amine tertiaire utilisable, on peut citer par exemple la pyridine (de pK $H_2O$: 5,25), la quinoléine (4,90), l'isoquinoléine (5,40), la méthyl-2 pyridine (6,20), la diméthylaniline (5,15), la diéthylaniline (6,60) (cf Handbook of Chemistry and Physics 49e Edition). Si l'on utilise une amine de pK $H_2O$ supérieur, il y a généralement formation d'un complexe entre l'amine tertiaire et le chlorure de téréphtaloyle (T-COCl) peu soluble empêchant totalement ou en partie la réaction du T-COCl avec la paraphénylènediamine (PPD). Il serait possible de pallier cet inconvénient par utilisation d'un milieu plus dilué mais on obtient alors une composition de concentration trop faible pour être filée directement de manière économique. De plus, la viscosité inhérente du polymère serait basse ce qui conduirait à des fils et autres articles conformés de propriétés faibles.

De même, pour obtenir une bonne composition directement conformable dans de bonnes conditions, la quantité d'amine tertiaire dans la composition doit être telle que le rapport A/P entre le nombre de moles de ladite amine et le nombre d'unités paraphénylènetéréphtalamide, c'est-à-dire de motifs chimiques

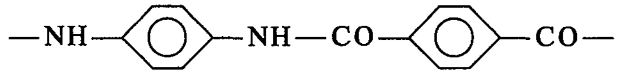

soit compris entre 1 et 3 de préférence entre 2 et 3. Ce rapport est calculé en supposant un taux de polycondensation de 100% en se bassant sur la quantité de paraphénylènediamine introduite.

L'utilisation de quantités plus importantes de base tertiaire favorise également la formation du complexe entre l'amine tertiaire et le T-COCl réduisant fortement la vitesse de réaction.

Il est possible de préparer une composition en utilisant une quantité d'amine tertiaire conduisant à un rapport A/P inférieur à 2 mais d'au moins I et d'ajouter éventuellement ensuite à la masse obtenue, une nouvelle quantité d'amine tertiaire pour amener le rapport A/P à au moins 2 dans la composition à conformer finale.

Le rapport C/P entre le nombre de moles de $CaCl_2$ ou de LiCl et le nombre d'unités paraphénylènetéréphtalamide doit être compris entre 0,75 et 2. Il est également calculé en supposant un taux de polycondensation de 100% et est basé sur la quantité de paraphénylènediamine introduite. Il dépend cependant des proportions des autres composés dans le milieu réactionnel. En effet, lorsque l'on opère avec une concentration en PPD élevée, il est quelquefois impossible d'atteindre un rapport C/P de 2 car le taux de chlorure dépasserait alors sa limite de solubilité dans le milieu ce qui doit être exclu car on doit travailler en milieu homogène.

La composition fluide conformable selon la présente invention doit contenir une quantité de PPD-T comprise entre 5 et 7% en poids par rapport au poids total de la composition. Une concentration en polymère inférieure à 5% conduirait à des compositions trop fluides, difficiles à conformer dans de bonnes conditions industriellement. Une concentration en polymère supérieure à 7% conduirait au contraire à des compositions trop visqueuses, également difficiles à conformer industriellement. On peut cependant préférer dans certains cas préparer la composition en utilisant des quantités de T-COCl et PPD conduisant à une concentration en polymère supérieure à 7%, puis la diluer au moyen de NMP seule ou additionnée d'amine tertiaire et/ou de chlorure de calcium ou lithium, pour ramener la concentration en polymère de la composition finale entre 5 et 7%. Dans ce cas cependant, il ne faut pas utiliser des quantités de chlorure de calcium ou lithium trop importantes, qui ne seraient pas entièrement dissoutes dans le milieu réactionnel.

Pour l'obtention de la composition conformable selon la présente invention, on dissout la paraphénylènediamine dans un mélange de NMP, chlorure de calcium ou lithium et base tertiaire, éventuellement sous un léger chauffage vers 30—40° C, voire même 60° C ou plus pour faciliter la dissolution. Puis on refroidit la solution à une température ne dépassant généralement pas la température ambiante mais de préférence inférieure, telle que 0° C ou même moins. La teneur en eau de la solution de PPD doit être la plus basse possible généralement très inférieure à 1000 ppm, de préférence inférieure à 500 ou mieux inférieure à 300 ppm, par exemple comprise entre 0 et 250 ppm. Pour cela, on utilise des produits anhydres ou préalablement séchés par exemple sous vide pour les chlorures ou par distillation pour la NMP et l'amine tertiaire. On peut également étêter par distillation un mélange de NMP brute et de chlorure de calcium ou lithium technique et distiller séparément l'amine tertiaire.

La réaction de polycondensation peut être effectuée en discontinu. Pour cela, on ajoute à la solution de diamine placée dans un récipient refroidi, le T-COCl sous forte agitation en une seule fois ou de préférence de façon ménagée c'est-à-dire soit par petites portions successives soit de manière continue, pour éviter une élévation importante de la température due à l'exothermicité de la réaction. On peut également effectuer la polycondensation en continu par injection simultanée da la solution de

PPD et du T-COCl fondu, dans un mélangeur, ce procédé étant de loin préférable pour des raisons économiques et techniques, meilleure régularité du polymère obtenu, par exemple. Pour cela, la température du T-COCl doit être suffisante pour qu'il soit à l'état liquide mais elle ne doit pas être trop élevée pour ne pas réchauffer trop le mélange réactionnel, ni risquer de le dégrader. On choisira donc de préférence une température comprise entre 85 et 120° C.

Le micromélange initial entre le T-COCl et la solution de diamine devant être instantané ou presque, il convient d'utiliser un appareil de mélange extrêmement efficace muni de dispositifs d'injection des réactifs très précis. On peut utiliser par exemple un dispositif du type d'un rotor tournant à grande vitesse dans un récipient fixe, laissant un faible jeu pour le passage de la matière entre le rotor et le stator pour assurer un mélange très efficace et rapide, lors des toutes premières secondes de la réaction.

Après cette première partie d'appareillage qui n'a pas besoin, pour assurer un temps de séjour de l'ordre de la seconde, d'être très volumineuse, la matière peut passer dans une seconde partie dans laquelle le malaxage de la matière est continué mais de manière plus lente par exemple dans un appareillage comportant une ou plussieurs vis.

On pourra également utiliser d'autres appareillages que celui décrit ci-dessus pourvu qu'ils soient suffisamment efficaces pour assurer un micromélange initial, entre les réactifs, quasi instantané.

Bien sur, les quantités de PPD et de T-COCl mises en œuvre doivent être sensiblement stoechiométriques.

Après la réaction de polycondensation, on peut éventuellement ajouter une nouvelle quantité de la même amine tertiaire que celle utilisée et/ou de NMP pouvant contenir du chlorure de calcium ou de lithium pour que la composition finale contienne 5 à 7% en poids de PPD-T et à la fois 2 à 3 moles d'amine tertiaire et 0,75 à 2 moles de chlorure de calcium ou lithium par unité paraphénylènetéréphtalamide.

Comme dit précédemment, on peut préparer un PPD-T contenant moins de 5% de radicaux autres que paraphénylène sans sortir du cadre de l'invention. Pour cela il suffit d'ajouter à la PPD ou au T-COCl une faibele quantité d'une autre diamine et/ou d'un autre dichlorure de diacide, en respectant toutefois la stoechiométrie entre les diamines et les dichlorures.

La composition obtenue est homogène et fluide. Elle présente une anisotropie optique permanente au stockage à l'abri de l'humidité pendant au moins plusieurs heures mais plus généralement plusieurs mois au moins à 0° C mais souvent également à température ambiante. Cette anisotropie croît généralement avec le temps. Une telle composition de PPD-T sensiblement pur telle qu'obtenue à l'issue de la polycondensation est directement utilisable pour sa mise en forme de fils, fibres, films ou fibrides, contrairement aux compositions de PPD-T sans HMPT obtenues jusqu'ici dont on devait obligatoirement d'abord séparer le polymère puis le redissoudre dans l'acide sulfurique pour mise en forme ultérieure. La composition selon la présente invention rend donc la mise en forme du PPD-T beaucoup plus simple et économique que les procédés connus jusqu'ici non seulement par la suppression de phases de traitement intermédiaires: séparation et redissolution du polymère, mais aussi par l'emploi de solvant plus facile à manipuler et moins dangereux que l'acide sulfurique ou l'HMPT.

La présente invention concerne donc également un procédé simplifié d'obtention de fils, fibres, films ou fibrides en PPD-T par extrusion ou coulage de la composition selon l'invention à une température de préférence inférieure à 25° C, à température ambiante ou plus basse, vers 9—10° C par exemple. L'extrusion est effectuée dans un bain aqueux pouvant être soit de l'eau pure, soit une solution aqueuse de chlorure de calcium ou lithium, soit un mélange de NMP, d'eau et de chlorure de calcium ou lithium. Pour ces deux derniers bains, on préfère utiliser le même chlorure que celui contenu dans la composition à mettre en forme.

La température du bain coagulant peut varier dans de larges limites, mais on n'a généralement pas intérêt, notamment pour des raisons économiques, à dépasser 35° C ni à descendre en dessous de 0° C. Les articles obtenus, fils, fibres, films ou fibrides sont ensuite lavés à l'eau de préférence à température ordinaire et séchés à l'air. Ils présentent de bonnes propriétés mécaniques.

Lex exemples suivants, dans lesquels les pourcentages sauf indication contraire sont en poids, sont donnés à titre indicatif pour illustrer l'invention sans la limiter aucunement.

Dans ces exemples, la viscosité inhérente (VI) du polymère est mesurée à 25°C sur une solution à 0,5 g de polymère dans 100 ml d'acide sulfurique à 100%. Elle est exprimée en dl · $g^{-1}$.

Le chlorure de calcium utilisé est le $CaCl_2$, 2 $H_2O$, traité à 200—250°C sous vide pendant 24 à 48 heures.

La PPD et le T-COClm utilisés sont à 99,4% sauf indication contraire.

Le taux d'étirage filière Ef est le rapport entre la vitesse de sortie du fil du bain coagulant et la vitesse moyenne d'extrusion. Lorsque ce taux est supérieur à 1, il s'agit d'un véritable étirage, tandis qu'il s'agit d'une contraction dans le cas d'un taux inférieur à 1.

Les propriétés mécaniques des fils sont mesurées sur brins unitaires de 5 cm au dynamomètre Instron avec 10 mesures par essai.

Exemple 1

Dans un réacteur de 2 litres, on introduit 54 g (0,5 mole) de paraphénylènediamine puis on ajoute un mélange ternaire de:

| | |
|---|---|
| NMP | 1175,6 g |
| $CaCl_2$ déshydraté | 78,7 g |
| pyridine | 79,1 g |

et contenant 310 ppm d'eau.

On chauffe le mélange pendant 30 minutes à environ 35° C pour faciliter la dissolution de la diamine puis le refroidit à 0° C au moyen d'un bain de saumure. Après 45 minutes on ajoute en une seule fois 102 g de T-COCl en paillettes sour forte agitation tandis que le réacteur est maintenu dans le bain de saumure. Après 4 minutes on ralentit l'agitation et maintient la compositon 15 minutes à 0° C puis on laisse revenir la composition à température ambiante sous faible agitation.

On obtient une composition contenant 8,58% de PPD-T que l'on conserve plusieurs heures à température ambiante, en atmosphère anhydre.

On la dilue par addition d'une solution de $CaCl_2$ dans la NMP à 6,28% sous agitation lente, jusqu'à obtention d'une composition de concentration en polymère 5,9% qui présente un rapport C/P de 2 et un rapport A/P également de 2. Elle est très visqueuse, homogène et présente une anisotropie optique au microscope entre polariseur et analyseur. La viscosité inhérente du polymère est de 3,65.

Après un mois de stockage à température ambiante, la composition anisotrope fluide à température ambiante (VI du polymère: 3,72) est extrudée à 20° C à raison de 3,15 $cm^3$/min à travers une filière présentant 100 orifices de 0,06 mm de diamètre immergée dans un bain d'eau à 20° C. Les fils obtenus à 14 m/min (Ef: 1,26) sont lavés à l'eau et séchés à l'air à température ordinaire. Ils présentent les caractéristiques suivantes:

| | |
|---|---|
| titre au brin | 1,62 dtex |
| ténacité | 61 cN/tex |
| allongement | 6,6% |
| module d'élasticité à l'origine | 1920 cN/tex |

Exemple 2

On opère comme à l'exemple 1 mais dans un réacteur de 0,5 l et avec les quantités suivantes:

| | |
|---|---|
| PPD | 7,57 g |
| NMP | 163,96 |
| $CaCl_2$ déshydraté | 11,65 |
| pyridine distillée | 11,08 |

La teneur en eau du mélange ternaire est de 230 ppm.

Après dissolution de la diamine et refroidissement à 0° C, on ajoute 14,30 g de T-COCl. Après 15 minutes on enlève le bain réfrigérant. Après une heure, on dilue la composition comme à l'exemple 1 jusqu'à obtenir une concentration en polymère: [PPD-T] de 6%. La composition homogène, présentant une anisotropie marquée à l'état statique, au microscope, est précipitée dans de l'eau à température ordinaire et donne des fibrilles.

Caractéristiques de la composition:

| | |
|---|---|
| [PPD-T] | 6% |
| rapport C/P | 2 |
| rapport A/P | 2 |
| VI du polymère | 4,55 |

Exemple 3

On opère comme à l'exemple 2 mais avec

| | |
|---|---|
| PPD | 5,4 grammes |
| NMP | 166,75 grammes |
| $CaCl_2$ déshydraté | 8,32 grammes |
| pyridine | 7,91 grammes |

Après dilution par la solution de $CaCl_2$ dans la NMP, on obtient une composition homogène, fluide, anisotrope à l'état statique au microscope en lumière polarisée présentant les caractéristiques suivantes:

| | |
|---|---|
| [PPD-T] | 5% |
| rapport C/P | 1,95 |
| rapport A/P | 2 |
| VI du polymère | 3,40 |

Après un mois de stockage au repos en milieu anhydre et à température ambiante, la composition n'a pas évolué.

On coule cette composition à température ambiante sous une épaisseur de 0,15 mm sur des plaques de verre et on les coagule de trois façons différentes:

A — Dans l'eau pure.
B — dans une solution aqueuse à 36% de $CaCl_2$.
C — Dans un mélange à 50/50 en volume de NMP et d'une solution aqueuse à 36% de $CaCl_2$.

Les films obtenus sont tous lavés à l'eau et séchés à l'air à température ambiante.
Seul le film A a tendance, sous tension, à former de longues fibrilles.
Les films B et C ont un bon aspect.

## Exemples 4 à 8

On répète l'exemple 1 mais le T-COCl est ajouté par petites portions successives dans lex exemples 5 à 8 tandis qu'il est ajouté en une seule fois à l'exemple 4. La pyridine est remplacée par la quinoléine dans les exemples 7 et 8. Les conditions opératoires et résultats sont rassemblés dans le tableau I ci-après dans lequel l'écart à la stoechiométrie représente l'excès (+) ou le défaut (−) de T-COCl par rapport à la stoechiométrie théorique exprimée en poids. La composition de l'exemple 5, ainsi que les compositions des exemples 7 et 8, n'a pas été diluée.

Les compositions obtenues sont toutes homogènes et anisotropes à l'examen, au microscope à l'état statique, en lumière polarisée.

Les compositions des exemples 4 à 5 sont filées comme à l'exemple 1 dans un bain d'eau. Les autres conditions de filage sont données dans le tableau I ci-après ainsi que les caractéristiques des fils obtenus.

## Exemples 9 à 14

On opère comme à l'exemple 1 sauf pour les exemples 13 et 14 où l'on opère sur des quantités plus importantes dans un réacteur de 45 litres.

Les autres conditions opératoires et les résultats sont donnés dans le tableau II ci-après.

Tableau I

| | exemple 4 | 5 | 6 | 7 | 8 |
|---|---|---|---|---|---|
| eau dans solution de diamine en ppm | 225 | 200 | 191 | 192 | 138 |
| durée d'addition du T-COCl | 30 sec | 1 h 23 | 15 min | 17 min | 15 min |
| température masse °C | 0–27 | 20–25 | 20–25 | 20–25 | 20–25 |
| écart à stoechiométrie | +0,6 | −1 | −1,5 | −1,5 | −1,5 |
| Composition après polycondensation: | | | | | |
| [PPD-T] % | 6 | 6 | 7 | ≃7 | 5 |
| rapport C/P | 1.5 | 2 | 1,5 | 1,5 | 2 |
| pyridine A/P | 2 | 2 | 3 | | |
| quinoléine A/P | | | | 3 | 3 |
| Composition après dilution: | | | | | |
| [PPD-T] % | 5 | | 6 | | |
| rapport C/P | 1,95 | | 1,84 | | |
| rapport A/P | 2 | | 3 | | |
| VI du polymère | 4,55 | 4,20 | 2,95 | | |
| Filage: | | | | | |
| température d'extrusion °C | 20 | 18 | 12 | | |
| température du bain °C | 20 | 18 | 16 | | |
| vitesse du fil en m/min | 7 | 10 | 8 | | |
| étirage filière | 1,10 | 0,95 | 1,23 | | |
| titre au brin en dtex | 1,04 | 1,93 | 1,62 | | |
| ténacité cN/tex | 36 | 29,7 | 24 | | |
| allongement % | 15,5 | 8,3 | 4,6 | | |
| module cN/tex | 1660 | 880 | 910 | | |

Tableau II

| | exemple 9 | 10 | 11 | 12 | 13 | 14 |
|---|---|---|---|---|---|---|
| eau dans solution de diamine en ppm | 127 | 612 | 127 | 206 | 241 | 247 |
| durée d'addition du T-COCl | 45 min | 45 min | 30 sec | 20 min | 73 min | 53 min |
| température masse °C | 20—25 | 20—25 | 20—52 | 20—25 | 20—25 | 20—25 |
| écart a stoechiométrie | −5,60 | −5,0 | −5,00 | −2,90 | −2,30 | −1,70 |
| PPD engagée en moles | 0,28 | 0,28 | 0,28 | 0,28 | 6 | 6 |
| Composition | | | | | | |
| [PPD-T] % après polycondensation | 5,9 | 5,9 | 5,9 | 6 | 6 | 6,15 |
| [PPD-T] % après dilution | 5 | 5 | 5 | 6 | 6 | 6,15 |
| C/P | 2 | 2 | 2 | 2 | 1,77 | 1,77 |
| pyridine A/P | | | | | | 2 |
| quinoléine A/P | 3 | 3 | 3 | 2 | 2 | |
| VI du polymère | 3,40 | 2,70 | 3,30 | 3,50 | 3,65 | 3,95 |

Les compositions obtenues sont toutes homogènes et présentent toutes une anisotropie au microscope à l'état statique en lumière polarisée.

## Exemples 15 et 16

On utilise un mélangeur du type turbine de mélange et stator rainurés et comportant des picots, de capacité 50 cm³ dont la turbine tourne à 5500 tours/minute.

On injecte simultanément et avec grande précision et régularité d'une part le chlorure de téréphtaloyle fondu et maintenu à 100°C, d'autre part une solution à 13,8°C de p-phénylènediamine dans un mélange NMP/$CaCl_2$ et pyridine dans les proportions suivantes:

| | | |
|---|---|---|
| NMP | 101,53 g | } contenant 150 ppm d'eau |
| $CaCl_2$ déshydraté | 6,57 g | } |
| pyridine | 4,88 g | contenant 100 ppm d'eau |

mélange auquel on ajoute 3,34 g de PPD à 99,9%.

L'injection est effectuée avec un rapport molaire T-COCl/PPD de 0,9955 à l'exemple 15 et 1,0000 à l'exemple 16.

Puis la matière obtenue à l'exemple 15, sortant du mélangeur, passe dans un appareil finisseur à double vis comportant 11 éléments de pétrissage et tournant à 80 tours/min. L'appareil est muni d'une double enveloppe alimentée en eau à 17° C. Par contre la matière obtenue à l'exemple 16 est recueillie directement à sa sortie du mélangeur, sans passer par le finisseur.

Caractéristiques des compositions obtenues:

| | exemple 15 | 16 |
|---|---|---|
| [PPD-T] % | 6 | 6 |
| rapport C/P | 1,92 | 1,92 |
| rapport A/P | 2 | 2 |
| VI du polymère | 3,66 | 4,03 |

Elles sont fluides, homogènes et anisotropes en lumière polarisée à l'état statique sous microscope.

Ces exemples montrent qu'il est possible d'obtenir un PPD-T de bonne viscosité inhérente par un procédé en continu extrêment court puisque le temps de séjour dans le réacteur pour l'exemple 16 est de 2,28 secondes.

Filage

Les compositions des exemples 9 à 16 ont été filées après 10 jours de stockage à l'abri de l'humidité à travers une filière de 100 orifices de 0,06 mm de diamètre dans un bain d'eau mais dans différentes conditions de température d'extrusion, température du bain coagulant, de vitesse du fil à la sortie du bain et d'étirage filière.

De plus, les compositions 13 et 14 ont également été filées dans les mêmes conditions, mais après trois mois de stockage à l'abri de l'humidité à température ambiante (ex 13' et 14').

Les caractéristiques mécaniques des fils obtenus sont donées dans le tableau III ci-après.

Tableau III

| exemple | température extrusion °C | température du bain °C | vitesse du fil m/min | Ef | titre au brin dtex | ténacité cN/tex | A % | module cN/tex |
|---|---|---|---|---|---|---|---|---|
| 9A | 22 | 15 | 12 | 1,22 | 1,41 | 18 | 4,5 | 570 |
| 9B | 9 | 9 | 9,5 | 1,00 | 1,40 | 28 | 4,2 | 1260 |
| 10A | 23 | 18 | 13 | 1,35 | 1,14 | 35 | 3,2 | 2450 |
| 10B | 9 | 14 | 14 | 1,44 | 0,95 | 31 | 2,8 | 2080 |
| 11A | 22 | 15 | 12 | 1,24 | 1,23 | 24 | 3,0 | 1070 |
| 11B | 9 | 9 | 10 | 1,10 | 1,26 | 29 | 3,5 | 1500 |
| 12A | 22 | 15 | 13 | 0,70 | 2,85 | 27 | 14,7 | 700 |
| 12B | 9 | 10 | 9,5 | 0,52 | 3,40 | 20 | 21,0 | 540 |
| 13A | 20 | 7 | 8,7 | 0,84 | 2,09 | 25 | 5,0 | 830 |
| 13B | 20 | 22 | 11 | 1,12 | 1,45 | 26 | 4,0 | 1090 |
| 13C | 20 | 35 | 10 | 1,10 | 1,47 | 27 | 3,8 | 1370 |
| 14A | 20 | 4 | 10 | 0,93 | 1,75 | 35 | 6,2 | 1080 |
| 14B | 20 | 20 | 9,5 | 0,90 | 2,02 | 37 | 7,2 | 910 |
| 14C | 20 | 35 | 10 | 0,96 | 2,13 | 30 | 8,8 | 940 |
| 15A | 20 | 4 | 8 | 0,80 | 2,04 | 68 | 5,1 | 2190 |
| 15B | 20 | 35 | 9 | 1,02 | 1,76 | 49 | 5,7 | 1670 |
| 15C | 20 | 35 | 18 | 2,32 | 0,90 | 51 | 3,7 | 2320 |
| 15D | 20 | 20 | 9 | 1,49 | 1,34 | 59 | 3,6 | 2700 |
| 15E | 20 | 20 | 13 | 1,51 | 1,08 | 66 | 4,4 | 2630 |
| 16A | 20 | 20 | 15 | 1,49 | 1,29 | 45 | 6,4 | 1710 |
| 16B | 20 | 4 | 9 | 0,93 | 2,17 | 35 | 6,0 | 1380 |
| 13'A | 20 | 7 | 9 | 0,90 | 2,03 | 28,2 | 4,3 | 1360 |
| 13'B | 20 | 22 | 12,5 | 1,24 | 1,30 | 31,2 | 2,7 | 2310 |
| 13'C | 20 | 35 | 18,0 | 1,75 | 1,01 | 29,8 | 3,3 | 1910 |
| 14'A | 20 | 7 | 10 | 0,95 | 2,0 | 44 | 5,4 | 1820 |
| 14'B | 20 | 22 | 17 | 1,60 | 1,25 | 46 | 4,4 | 2360 |
| 14'C | 20 | 35 | 23,5 | 2,25 | 0,94 | 53 | 3,9 | 2820 |

Exemples 17 à 20

On opère comme à l'exemple 2 avec de la pyridine.

Après polycondensation on ajoute de la pyridine à la composition de l'exemple 17 tandis que l'on dilue la composition de l'exemple 19 avec une solution de $CaCl_2$ dans la NMP.

Les conditions opératories et résultats sont indiqués dans le tableau IV ci-après.

Tableau IV

| | exemple 17 | 18 | 19 | 20 |
|---|---|---|---|---|
| eau dans solution de diamine en ppm | 150 | 164 | 278 | 218 |
| durée d'addition T-COCl | 30 min | 60 min | 180 min | 19 min |
| température masse °C | 20—25 | 20—25 | 20—25 | 0—5 |
| écart à stoechiométrie | −2,35 | −2,70 | −5,45 | +0,6 |
| Composition après polycondensation: | | | | |
| [PPD-T] % | 6,13 | 6,21 | 9,92 | 5 |
| rapport C/P | 0,75 | 0,75 | 1 | 2 |
| rapport A/P | 1 | 3 | 1 | 2 |
| Composition après dilution: | | | | |
| [PPD-T] % | | | 6 | |
| rapport C/P | | | 2 | |
| rapport A/P | 2 | | 1 | |
| VI du polymère | 3,00 | 3,20 | 2,55 | 4,80 |

Toutes les compositions obtenues sont fluides, homogènes et anisotropes, en lumière polarisée, sous microscope, à l'état statique. Elles sont filables.

Exemples 21 à 25 (comparatifs)

On répète encore l'exemple 2 avec de la pyridine. Les conditions opératoires et résultats sont indiqués dans le tableau V ci-après.

Tableau V

| | exemple 21 | 22 | 23 | 24 | 25 |
|---|---|---|---|---|---|
| eau dans solution de diamine en ppm | 133 | | | 298 | |
| durée d'addition T-COCl | 30 min | 30 sec | 30 sec | 30 sec | 30 sec |
| température masse °C | 20–25 | 0–30 | 0–30 | 0–30 | 0–30 |
| écart à stoechiométrie | −6,5 | +0,6 | +0,6 | +0,6 | +0,6 |
| Composition après polycondensation: | | | | | |
| [PPD-T] % | 6,18 | 8,45 | 8 | 7 | 9 |
| rapport C/P | 0,5 | 1,5 | 1,5 | 1,5 | 2 |
| rapport A/P | 2 | 0 | 1 | 4 | 3,24 |
| VI du polymère | 3,75 | 4,80 | 5,28 | | 1,01 |

Toutes les compositions obtenues sont hétérogènes, présentant souvent l'aspect d'une semoule.

Une addition de pyridine ou de NMP seule ou avec du $CaCl_2$ ne permet pas de les rendre homogènes.

Elles ne peuvent pas être filées directement.

Ces exemples montrent:

- qu'un rapport C/P trop faible ne convient pas (ex 21 par rapport à l'ex 14),
- que l'absence d'amine tertiaire ne convient pas (ex 22 à comparer à l'ex 2),
- qu'un rapport C/P fort, joint à une concentration en polymère également forte peut conduire à une masse hétérogène qu'il n'est plus possible de rendre homogène surtout si l'on ajoute le T-COCl en une seule fois (ex 23 à comparer à l'ex 19),
- qu'un rapport A/P trop fort ne convient pas (ex 24–25).

Exemples 25 à 30

On opère comme à l'exemple 2 mais avec différentes amines tertiaires.

Les conditions opératoires et résultats sont indiqués dans le tableau VI ci-après.

Tableau VI

| | exemple 26 | 27 | 28 | 29 | 30 |
|---|---|---|---|---|---|
| eau dans solution de diamine en ppm | 255 | 272 | 259 | 276 | 128 |
| durée d'addition T-COCl | ≃180 min | ≃60 min | 80 min | 120 min | 29 min |
| température masse °C | 20—25 | 20—25 | 20—25 | 20—25 | 0—5 |
| écart à stoechio | −1,73 | −1,50 | −6 | −1,8 | −0,42 |
| amine tertiaire | NN-diméthyl-aniline | Isoqui-noléine | méthyl-2-pyridine | NN-diéthyl-aniline | quino-léine |
| pK $H_2O$ | 5,15 | 5,40 | 6,00 | 6,60 | 4,9—5,0 |
| Composition après polycondensation: | | | | | |
| [PPD-T] % | 6,024 | 6 | 6,11 | 5,94 | 5,80 |
| rapport C/P | 1,77 | 1,77 | 1,77 | 1,77 | 1,78 |
| rapport A/P | 2 | 2 | 2 | 2 | 2 |
| VI du polymère | 4,00 | 3,75 | 4,00 | 4,50 | 5,45 |

Seule la composition obtenue à l'exemple 30, homogène mais très visqueuse, a été diluée avec une solution de chlorure de calcium dans la NMP jusqu'à obtenir un rapport C/P de 2 et une concentration en polymère de 5,33%.

Toutes les compositions obtenues sont fluides homogènes et anisotropes en lumière polarisée, sous microscope, à l'état statique. Elles sont filables.

## Exemples 31 à 33 (comparatifs)

On opère comme à l'exemple 2 avec différentes amines de pK $H_2O$ supérieur à 6,60.

Les conditions opératoires et résultats sont indiqués dans le tableau VII ci-après.

Les compositions obtenues sont toutes hétérogènes et ne peuvent pas être filées.

## Exemples 34 à 37

On opère comme à l'exemple 2 mais avec du chlorure de lithium. On obtient les résultats indiqués dans le tableau VIII ci-après.

Tableau VII

| | exemple 31 | 32 | 33 |
|---|---|---|---|
| eau dans solution de diamine en ppm | 255 | 261 | 256 |
| amine tertiaire | triméthyl-2-4-6 pyridine | diméthyl-2-6-pyridine | triéthylamine |
| pK $H_2O$ | 7,40 | 7 | 11,00 |
| Composition après polycondensation: | | | |
| [PPD-T] % | 6,024 | 6,067 | 6,085 |
| rapport C/P | 1,77 | 1,77 | 1,77 |
| rapport A/P | 2 | 2 | 2 |

Tableau VIII

| | exemple 34 | 35 | 36 | 37 |
|---|---|---|---|---|
| température masse °C | 0—5 | 0—5 | 0—5 | 0—5 |
| écart à stoechiométrie | −4 | −3,4 | −2,2 | −4 |
| amine tertiaire | pyridine | pyridine | pyridine | N,N-diméthylaniline |
| Composition après polycondensation: | | | | |
| [PPD-T] % | 5 | 5 | 5 | 5 |
| rapport C/P | 1,5 | 1 | 0,75 | 1 |
| rapport A/P | 2,5 | 2 | 2 | 2 |
| VI du polymère | 2,45 | 2,90 | 5,05 | |

Les compositions obtenues sont toutes fluides, homogènes et anisotropes à la lumière polarisée, sous microscope, à l'état statique. Elles sont stables pendant une à plusieurs heures à l'abri de l'humidité à basse température ambiante. Elles sont filables.

**Revendications**

1. Composition fluide, homogène conformable constituée de N-méthylpyrrolidone-2, de polyparaphénylènetéréphtalamide, contenant au moins 95% de radicaux paraphénylène, à raison de 5 à 7% en poids de polymère par rapport au poids de la composition, de chlorure de calcium ou de lithium et d'une amine tertiaire de pK $H_2O$ au plus égal à 6,60, le rapport du nombre de moles de ces deux derniers produits au nombre d'unités paraphénylènetéréphtalamide étant de 0,75 à 2 pour le chlorure de calcium ou de lithium et de 1 à 3 pour l'amine tertiaire.

2. Composition selon 1 dans laquelle l'amine tertiaire est la pyridine.

3. Composition selon 1 dans laquelle l'amine tertiaire est choisie parmi la quinoléine, l'isoquinoléine, la méthyl-pyridine, la diméthylaniline, la diéthylaniline.

4. Composition selon 1 dans laquelle le rapport du nombre de mole d'amin tertiaire au nombre d'unités paraphénylènetéréphtalamide est compris entre 2 et 3.

5. Procédé d'obtention de la composition selon 1 dans lequel on fait réagir du chlorure de téréphtaloyle en quantité sensiblement stoechiométrique sur une solution de paraphénylènediamine, de teneur en eau inférieure à 1000 ppm, en quantité telle que l'on puisse former une composition d'au moins 5% en poids de paraphénylènetéréphtalamide dans un mélange homogène de N-méthylpyrrolidone, de chlorure de calcium ou lithium et d'une amine tertiaire de pK $H_2O$ au plus égal à 6,60, le rapport molaire de chacun de ces deux derniers produits à la paraphénylènediamine étant de 0,75 à 2 pour le chlorure de calcium ou de lithium et de 1 à 3 pour l'amine tertiaire, sans toutefois dépasser la limite de solubilité du chlorure de calcium ou lithium.

6. Procédé selon 5 dans lequel on ajoute une nouvelle quantité de la même amine tertiaire et/ou de N-méthylpyrrolidone-2 pouvant contenir du chlorure de calcium ou lithium pour que la composition finale contienne 5 à 7% en poids de polyparaphénylènetéréphtalamide et à la fois 0,75 à 2 moles de chlorure de calcium ou lithium et de préférence 2 à 3 moles d'amine tertiaire par unité paraphénylènetéréphtalamide.

7. Procédé selon 5 dans lequel on effectue la réaction entre le chlorure de téréphtaloyle et la solution de paraphénylènediamine en continu.

8. Procédé selon 5 dans lequel on effectue la réaction entre le chlorure de téréphtaloyle et la solution de paraphénylènediamine en discontinu avec addition ménagée du chlorure de téréphthaloyle.

9. Procédé d'obtention de fils, fibres, films ou fibrides en polyparaphénylène téréphtalamide, contenant au moins 95% de radicaux paraphénylène, de bonnes qualités mécaniques par extrusion ou coulage d'une composition selon 1 à une température de préférence inférieure à 25° C dans un bain coagulant à base d'eau à température de préférence inférieure à 35° C, lavage à l'eau et séchage à l'air.

**Patentansprüche**

1. Fluide, homogene, verformbare Zusammensetzung, bestehend aus N-Methylpyrrolidon-2, Polyparaphenylenterephthalamid, enthaltend mindestens 95% Paraphenylenreste, in einer Menge von 5 bis 7 Gew.-% Polymerem in bezug auf das Gewicht der Zusammensetzung, Calcium- oder Lithiumchlorid und einem tertiären Amin vom pK $H_2O$ höchstens gleich 6,60, wobei das Verhältnis der Zahl der Mole dieser beiden letzteren Verbindungen zur Zahl der Paraphenylenterephthalamid-Einheiten von 0,75 bis 2 für das Calcium- oder Lithiumchlorid und von 1 bis 3 für das tertiäre Amin beträgt.

2. Zusammensetzung gemäß Anspruch 1, worin das tertiäre Amin Pyridin ist.

3. Zusammensetzung gemäß Anspruch 1, worin das tertiäre Amin ausgewählt ist unter Chinolin, Isochinolin, Methylpyridin, Dimethylanilin, Diethylanilin.

4. Zusammensetzung gemäß Anspruch 1, worin das Verhältnis der Zahl der Mole tertiäres Diamin zur Zahl der Paraphenylenterephthalamid-Einheiten zwischen 2 und 3 beträgt.

5. Verfahren zur Herstellung der Zusammensetzung gemäß Anspruch 1, dadurch gekennzeichnet, daß man Terephthaloylchlorid in im wesentlichen stöchiometrischer Menge auf eine Lösung von Paraphenylendiamin mit einem Gehalt an Wasser unterhalb 1000 ppm in einer solchen Menge einwirken läßt, daß man eine Zusammensetzung mit mindestens 5 Gew.-% Paraphenylenterephthalamid in einem homogenen Gemisch von N-Methylpyrrolidon, Calcium- oder Lithiumchlorid und einem tertiären Amin vom pK $H_2O$ höchstens gleich 6,60 bilden kann, wobei das Molverhältnis von jedem dieser letzteren Produkte zu dem Paraphenylendiamin von 0,75 bis 2 für das Calcium- oder Lithiumchlorid und von 1 bis 3 für das tertiäre Amin beträgt, ohne die Löslichkeitsgrenze des Calcium- oder Lithiumchlorids zu überschreiten.

6. Verfahren gemäß Anspruch 5, dadurch gekennzeichnet, daß man eine neue Menge desselben tertiären Amins und/oder N-Methylpyrrolidon-2, das Calcium- oder Lithiumchlorid enthalten kann, zusetzt, damit die Endzusammensetzung 5 bis 7 Gew.-% Polyparaphenylenterephthalamid und gleichzeitig 0,75 bis 2 Mol Calcium- oder Lithiumchlorid und vorzugsweise 2 bis 3 Mol tertiäres Amin pro Paraphenylenterephthalamid-Einheit enthält.

7. Verfahren gemäß Anspruch 5, dadurch gekennzeichnet, daß man die Reaktion zwischen dem Terephthaloylchlorid und der Paraphenylendiamin-Lösung kontinuierlich durchführt.

8. Verfahren gemäß Anspruch 5, dadurch gekennzeichnet, daß man die Reaktion zwischen dem Terephthaloylchlorid und der Paraphenylendiamin-Lösung diskontinuierlich unter schonender Zugabe des Terephthaloylchlorids durchführt.

9. Verfahren zur Erzielung von Fäden, Fasern, Filmen oder Fibriden aus Polyparaphenylenterephthalamid, enthaltend mindestens 95% Paraphenylen-Radikale, von guten mechanischen Eigenschaften durch Auspressen oder Gießen einer Zusammensetzung gemäß Anspruch 1 bei einer Temperatur von vorzugsweise unterhalb 25° C in ein Fällbad auf Basis von Wasser einer Temperatur vorzugsweise unterhalb 35° C, Waschen mit Wasser und Trocknen an der Luft.

**Claims**

1. Homogeneous fluid composition which can be shaped, consisting of N-methylpyrrolidone-2, poly-para-phenylenterephthalamide containing at least 95% of paraphenylene units, in an amount of 5 to 7% by weight of polymer, relative to the weight of the composition, calcium chloride or lithium chloride, and a tertiary amine with a pK $H_2O$ equal to at most 6.60, the ratio of the number of mols of these last two products to the number of par-phenyleneterephthalamide units being 0.75 to 2 in the case of the calcium chloride or lithium chloride and 1 to 3 in the case of the tertiary amine.

2. Composition according to 1, in which the tertiary amine is pyridine.

3. Composition according to 1, in which the tertiary amine is chosen from amongst quinoline, isoquinoline, methylpyridine, dimethylaniline and diethylaniline.

4. Composition according to 1, in which the ratio of the number of mols of tertiary amine to the number of para-phenyleneterephthalamide units is between 2 and 3.

5. Process for the production of the composition according to 1, in which process a substantially stoichiometric amount of terephthaloyl chloride is reacted with a solution of para-phenylenediamine having a proportion of water less than 1000 ppm, in an amount such that it is possible to form a composition containing at least 5% by weight of para-phenyleneterephthalamide, in a homogeneous mixture of N-methylpyrrolidone, calcium chloride or lithium chloride, and a tertiary amine with a pK $H_2O$ equal to at most 6.60, the molar ratio of each of these last two products to the para-phenylenediamine being 0.75 to 2 in the case of the calcium chloride or lithium chloride and 1 to 3 in the case of the tertiary amine, without however exceeding the solubility limit of the calcium chloride or lithium chloride.

6. Process according to 5, in which a further amount of the same tertiary amine and/or of N-methylpyrrolidone-2, which can contain calcium chloride or lithium chloride, is added, so that the final composition contains 5 to 7% by weight of poly-paraphenyleneterephthalamide and at the same time 0.75 to 2 mols of calcium chloride or lithium chloride and preferably 2 to 3 mols of tertiary amine per para-phenyleneterephthalamide unit.

7. Process according to 5, in which the reaction of the terephthaloyl chloride with the para-phenylenediamine solution ist carried out continuously.

8. Process according to 5, in which the reaction of the therephthaloyl chloride with the para-phenylenediamine solution is carried out batchwise with controlled addition of the terephthaloyl chloride.

9. Process for the production of filaments, fibres, films or fibrids of poly-paraphenyleneterephthalamide containing at least 95% of paraphenylene units having good mechanical properties, by extrusion or casting of a composition according to 1, at a temperature which is preferably below 25°C into a water-based coagulating bath at a temperature which is preferably below 35°C, washing with water and drying in air.